# EUROPEAN PATENT APPLICATION

(11) **EP 1 881 655 A1**
(43) Date of publication of application: **23.01.2008**
(21) Application number: 06014920.0
(22) Date of filing: 18.07.2006
(51) Int. Cl.: H04L 12/56

(54) **Signalling scheme for shared channel operation**

(71) Applicant: Nokia Siemens Networks GmbH & Co. KG, 81541 München (DE)
(72) Inventor: Breuer, Volker, 16727 Bötzow (DE); Kroth, Norbert, 14482 Potsdam (DE)

(57) **Abstract**

According to the method for operating a radio communication system, data packets (PAC1, PAC2, PAC3) are transmitted from a radio station to a user terminal or from the user terminal to the radio station. Before the transmission of a data packet (PAC1, PAC2, PAC3) the radio station transmits scheduling information (S1, S2, S32, S4) to the user terminal, the scheduling information (S1, S2, S32, S4) indicating the radio resources to be used for the transmission of the respective data packet (PAC1, PAC2, PAC3). During the transmission of a first data packet (PAC1), the scheduling information (S2) regarding a second data packet (PAC2) is transmitted.

## Description

The present invention relates to a method for operating a radio communication system, wherein data packets are transmitted from a radio station to a user terminal or from the user terminal to the radio station.

In radio communication systems, messages containing information such as speech, video data, SMS (Short Message Service), MMS (Multimedia Messaging Service) etc. are transmitted over an air interface between radio stations. The transmission can be both bidirectional and unidirectional. Radio stations receiving and/or transmitting messages can be part of the network infrastructure, being e.g. base stations, repeaters, access points; on the other hand, radio stations being user terminals exist. In a mobile radio communication system, at least some user terminals are mobile radio stations. For transmitting messages, carrier frequencies available to the respective radio communication system are used.

Current mobile radio communication systems are oftentimes cellular systems designed e.g. according to the standard GSM (Global System for Mobile Communication) or UMTS (Universal Mobile Telecommunications System), having network infrastructure components comprising amongst others base stations and devices for controlling the base stations. A further example of a radio communication system is a broadband system with wireless access, e.g. according to IEEE 802.16. Future systems may be evolutions of UMTS, referred to as LTE (Long Term Evolution), fourth generation systems, or ad-hoc networks. Besides the wide-ranging cellular systems, wireless local networks like WLANs, HiperLAN systems, DECT systems, IEEE 802.11 systems, Bluetooth systems, and WATM systems can be deployed.

Different multiple access techniques exist in order to allow user terminals to access the radio resources. Multiple access techniques allow for a partitioning of radio resources in the time domain (Time Division Multiple Access, TDMA), in the frequency domain (Frequency Division Multiple Access, FDMA), in the code domain (Code Division Multiple Access, CDMA), and in the space domain (Space Division Multiple Access, SDMA). Preferably combinations of different multiple access techniques are applied, such as the combination of a FDMA and a CDMA technique.

In order to make an especially efficient transmission of information possible, a frequency band can be subdivided into a multiplicity of subcarriers. This method permits to transmit several narrowband signals instead of one broadband signal, having the advantage of reducing the complexity on the receiver end. Furthermore, by using subcarriers radio resources can be assigned to user terminals with high granularity. The latter is especially beneficial for transmissions with varying data rates. OFDM (Orthogonal Frequency Division Multiplexing), an example of a multicarrier transmission method, uses approximately rectangular pulse shapes in the time domain. Looking at a certain subcarrier, as a result of the choice of the width of OFDM-subcarriers, the signals of the other subcarriers have a zero crossing in the middle of the certain subcarrier, so that the OFDM-subcarriers are orthogonal to each other. In case narrow subcarriers are used, the signal transmission of the single subcarriers is normally not frequency selective.

When using circuit switching, a specified amount of radio resources is reserved exclusively for a user terminal. In GSM systems for instance, each n-th time slot of a GSM frequency band can be assigned to a user terminal; in UMTS systems one or more codes can permanently be assigned to a user terminal. In contrast, when applying packet switching, radio resources are only exclusively assigned to user terminals for the time periods of transmitting / receiving data packets.

An object of the present invention is to provide an advantageous method for operating a radio communication system which allows for the transmission of data packets. It is a further object of the invention to provide a respective radio station and user terminal.

The object is achieved by a method for operating a radio communication system, a radio station and a user terminal according to the independent claims. Further developments and advantageous embodiments of the invention are the subject-matter of dependent claims.

According to the inventive method for operating a radio communication system, data packets are transmitted from a radio station to a user terminal or from the user terminal to the radio station. Before the transmission of a data packet, the radio station transmits scheduling information to the user terminal, the scheduling information indicating the radio resources to be used for the transmission of the respective data packet. During the transmission of a first data packet, the scheduling information regarding a second data packet is transmitted.

The radio station is preferably a radio station of the radio communication system's infrastructure, e.g. a base station of a cellular system or an access point of a local system. In this case, the invention applies either to the uplink, in this connexion the data packets being transmitted from the user terminal to the radio station, or it applies to the downlink, in this connexion the data packets being transmitted from the radio station to the user terminal.

The invention concerns packet-wise transmission of data. The data packets can contain e.g. text and/or audio and/or picture and/or video and/or multimedia information. For the packet-wise transmission, scheduling for individual data packets is applied. This scheduling information is sent by the radio station. It indicates either which radio resources the radio station is going to use for the transmission of the respective data packet or which radio resources the user terminal has to use for the transmission of the respective data packet. The transmitted scheduling information inherently can contain different information elements. From the scheduling information, the user terminal knows which radio resources have to be used for the transmission or reception of the respective data packet. It is possible that packets different from the data packets are transmitted for which no scheduling for individual packets is applied.

The transmission of the scheduling information of the second data packet takes place during the transmission of the first data packet. This does not mean that the first data packet's transmission and the second data packet's scheduling information's transmission have the same duration, but rather that the transmission of the scheduling information of the second data packet occurs at some time during the transmission of the first data packet. The transmission of said scheduling information begins not before the start of the transmission of the first data packet, and it ends not after the end of the transmission of the first data packet. In case the first data packet is transmitted from the radio station to the user terminal, the user terminal receives simultaneously the first data packet and the scheduling information regarding the second data packet. In case the first data packet is transmitted from the user terminal to the radio station, the user terminal simultaneously transmits the first data packet and receives the scheduling information regarding the second data packet.

Preferable the second data packet directly succeeds the first data packet, i.e. the first data packet is the previous data packet with respect to the second data packet. Nevertheless it is possible that one or more data packets are transmitted between the first and the second data packet.

According to a preferred embodiment the second data packet's scheduling information is transmitted during a period of time the position of which relative to the period of time of the first data packet's transmission is known to the radio station and to the user terminal. This allows the user terminal to try to detect the scheduling information only in the known period of time. The relation between the position of the scheduling information and the first data packet could for instance be as follows: the transmission of the scheduling information begins after a certain time span after the start of the transmission of the first data packet.

Preferably the second data packet's scheduling information is transmitted at the end of the transmission of the first data packet. In case the length of the first data packet is known to the radio station and to the user terminal, the relation between the position of the scheduling information and the first data packet could for instance be as follows: the transmission of the scheduling information begins at a certain time span before the end of the transmission of the first data packet.

According to an advantageous embodiment the first data packet is transmitted using one or more first subcarriers of a frequency band, the second data packet's scheduling information is transmitted using one or more second subcarriers of the frequency band, and the first subcarriers differ from the second subcarriers. Preferably, no subcarrier exists which is part of both the first subcarriers and the second subcarriers. Alternatively, the first subcarriers can partially overlap the second subcarriers.

In an embodiment of the invention, the scheduling information regarding a third data packet is transmitted after the transmission of the previous data packet, the previous data packet being the second data packet. Accordingly, the third data packet's scheduling information is transmitted not during an other data packet's transmission, but after the transmission of the previous data packet and therefore in between the transmission of data packets. Hence, both data packets can exist the scheduling information of which is transmitted during the transmission of a data packet, and data packets the scheduling information of which is not transmitted during the transmission of a data packet.

Advantageously during the transmission of the second data packet information is transmitted from the radio station to the user terminal indicating the radio resources to be used for the transmission of the third data packet's scheduling information. To proceed like this has the advantage that the content of the scheduling information regarding the third data packet does not have to be established by the end of the transmission of the previous data packet.

Advantageously during the transmission of the second data packet information is transmitted from the radio station to the user terminal instructing the user terminal to continuously or periodically monitor a radio channel used for transmitting scheduling information. This monitoring can in particular be applied for time periods during which no data packets are transmitted.

According to an advantageous embodiment, during the time span between the transmission of the first data packet and the transmission of the second data packet, the receiver of the user terminal is switched off. Switching off is possible as scheduling information is transmitted during the transmission of a data packet, so that no scheduling information has to be transmitted between the transmission of data packets.

In an alternative embodiment during the time span between the transmission of the first data packet and the transmission of the second data packet, the receiver of the user terminal is tuned to a frequency range different from the frequency range used for the transmission of the data packets and the scheduling information. Changing the tuning is possible as scheduling information is transmitted during the transmission of a data packet, so that no scheduling information has to be transmitted between the transmissions of data packets. While the receiver is tuned to the other frequency range, e.g. measurements with respect to this frequency range can be performed.

According to a preferred embodiment, before receiving the first data packet, the user terminal continuously or periodically monitors a radio channel used for transmitting scheduling information and receives the scheduling information regarding the first data packet. To proceed like this is especially advantageous in case the first data packet is the first data packet transmitted after the user terminal changes into an active state.

The user terminal according to the invention comprises means for receiving data packets transmitted from a radio station or means for transmitting data packets to the radio station, means for receiving from the radio station before the transmission of a data packet scheduling information, the scheduling information indicating the radio resources to be used for the transmission of the respective data packet, and means for receiving scheduling information regarding a second data packet, the scheduling information regarding the second data packet being transmitted during the transmission of a first data packet.

The radio station according to the invention comprises means for receiving data packets transmitted from a user terminal or means for transmitting data packets to the user terminal, means for transmitting to the user terminal before the transmission of a data packet scheduling information, the scheduling information indicating the radio resources to be used for the transmission of the respective data packet, and means for transmitting scheduling information regarding a second data packet, the scheduling information regarding the second data packet being transmitted during the transmission of a first data packet.

The radio station and the user terminal according to the invention are suited in particular for performing method steps according to the invention. The radio station and the user terminal can comprise means necessary to perform any method steps according to embodiments of the method.

The present invention will become more apparent from the description given herein below and from the accompanying drawings which are given by way of illustration only, and thus are not limitative of the present invention, and wherein:
- Fig. 1: depicts a radio cell of a mobile radio communication system,
- Fig. 2: depicts the scheduling of a user terminal.

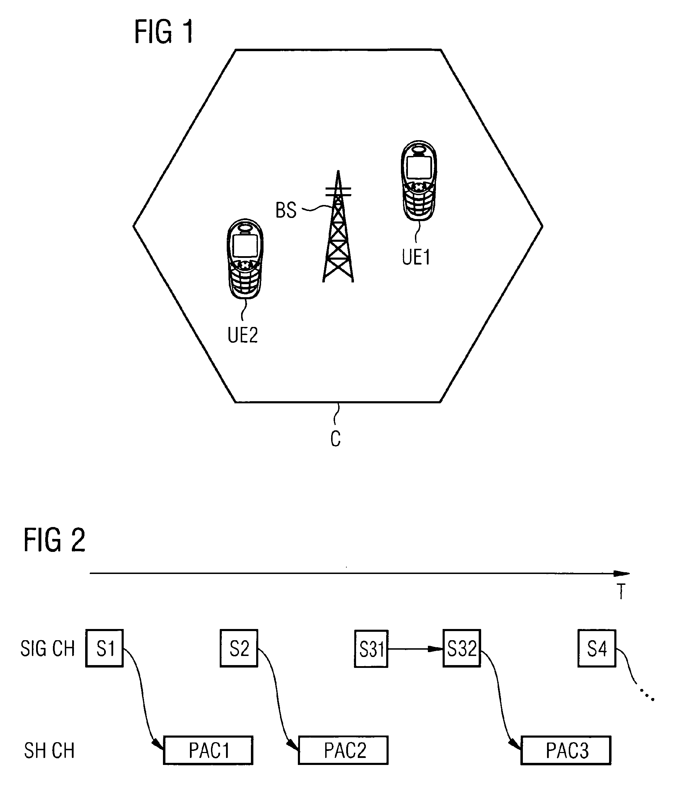

Figure 1 shows the radio cell C of the base station BS of a mobile radio communication system. The base station BS is connected to a wired of wireless backhaul service, the backhaul for simplification reasons not being depicted in figure 1. The invention can advantageously be used in any kind of radio communications system: the mobile radio communication system considered in the embodiment can e.g. be a cellular system, preferably according to an evolution of the UMTS standard, or a local system. Located inside the cell C is the user terminal UE1 and UE2. A user terminal is for instance a mobile radio terminal, in particular a mobile phone or a flexible fixed device, controlled by a human or a machine. The user terminals UE1 and UE2 communicate with the base station BS using a wireless link. Via the base station BS, user terminals within the radio cell C can communicate with each other, with radio stations of other radio cells, or with other communication systems such as the internet. It is possible that the radio communication system comprises radio cells besides the radio cell C of figure 1.

In the following, transmissions in the downlink from the base station BS to the user terminals UE1 or UE2 are considered. This downlink transmission concerns the transmission of data packets. For the transmission of these data packets a shared channel SH CH, depicted in figure 2, is used. Figure 2 shows transmissions of the shared channel SH CH, and of a signalling channel SIG CH, the course of time T being the horizontal dimension. The channel SH CH is termed shared channel because it is not exclusively used for the communication between the base station BS and one specific user terminal. The radio resources of the shared channel SH CH are only temporarily assigned to a user terminal for the reception of data packets, in contrast to permanent assignment of continuous dedicated resources (often referred to as dedicated channels) in many legacy systems. Therefore, if the base station BS intends to transmit a data packet to the user terminal UE1, radio resources of the shared channel SH CH are assigned to the user terminal UE1, and if the base station BS intends to transmit a data packet to the user terminal UE2, radio resources of the shared channel SH CH are assigned to the user terminal UE2.

The channels SH CH and SIG CH are separated by a suitable multiple access technique, e.g. FDMA (Frequency Division Multiple Access) or CDMA (Code Division Multiple Access). In case of an OFDM system, the channels SH CH and SIG CH can be separated by using different subcarriers of a frequency band.

The signalling channel SIG CH is used for scheduling, i.e. for informing the user terminals UE1 or UE2 which radio resources of the shared channel SH CH are used for transmitting data packets to the respective user terminal UE1 or UE2. Figure 2 shows the scheduling of the user terminal UE1 by use of the signalling channel SIG CH. After transition to the active state, initiated e.g. by a paging message sent from the base station BS to the user terminal UE1, the user terminal UE1 starts monitoring the signalling channel SIG CH.

The monitoring can be performed continuously. Preferably however, the monitoring is performed only periodically using a DRX (Discontinuous reception) mechanism according to which the receiver of the user terminal UE1 is switched on or tuned to the respective frequency only during predefined times. These predefined times do not necessarily have to recur periodically. The DRX cycle length can be adapted to vary over time, so that the inactivity periods of a user terminal can be of different length.

Being able to switch off the receiver while not having to monitor a channel has the advantage of reducing the user terminal's UE1 energy demand. Continuously monitoring the signalling channel SIG CH therefore is disadvantageous from the battery consumption point of view as the receiver would always have to be active which would drain the battery of the user terminal UE1 rather quickly. A further advantage of the DRX monitoring of the signalling channel SIG CH is free time e.g. to perform measurements in between the times of monitoring the signalling channel SIG CH. In this case, the receiver of the user terminal UE1 is not switched off, but rather tuned to an other frequency band for performing measurements or listening to signals transmitted in the other frequency band. Here, the other frequency band can be a frequency band used by an other cell of the radio communication system, or used by an other radio communication system. Generally speaking, it is advantageous for the user terminal UE1 to introduce time spans during which the user terminal UE1 does not receive and/or transmit messages in the frequency band of the channels SIG CH and SH CH.

The periodic or as the case may be continuous monitoring of the signalling channel will in the following be referred to as "regular monitoring". The user terminal UE1 detects, by regular monitoring of the signalling channel SIG CH, the scheduling information S1. As the scheduling information S1 contains an identifier of the user terminal UE1, the user terminal UE1 recognizes that the scheduling information S1 is directed towards the user terminal UE1. The scheduling information S1 can explicitly indicate the radio resources assigned to the user terminal UE1 for the reception of the data packet PAC1, e.g. by specifying a frequency, when using OFDMA in the form of one or more subcarriers, and time instance when the resources are granted for the user terminal UE1, and duration of granted resources, e.g. TTI-length (TTI: Transmission Time Interval). Furthermore, the scheduling information S1 can contain HARQ (Hybrid Automatic Repeat Request) information such as a process identifier and a new data / retransmission indicator. The radio resource information of the scheduling information S1 can be provided explicitly as explained, or implicitly via a reference to a set of resource parameters known by the user terminal UE1.

Using the received scheduling information S1, the user terminal UE1 listens to the shared channel SH CH according to the radio resources being indicated by the scheduling information S1 and receives the data packet PAC1. The data packet PAC1 contains e.g. audio and/or text and/or picture and/or video information. At the end of the allocated shared channel SH CH period, i.e. at the end of the reception of the data packet PAC1, the user terminal UE1 again monitors the signalling channel SIG CH and receives the scheduling information S2. This means the user terminal UE1 receives the scheduling information S2 parallel to receiving the data packet PAC1. The scheduling information S2 indicates - analogously to the explanations regarding the scheduling information S1 - the radio resources of the shared channel SH CH which will be used for the transmission of the following data packet PAC2.

As the scheduling of the user terminal UE1 takes place already during the transmission of the previous data packet PAC1, the user terminal UE1 does not have to monitor the signalling channel SIG CH between the reception of the previous data packet PAC1 and the following data packet PAC2. This is beneficial as the reception of the scheduling information happens during a time when the user terminal UE1 receives a data packet and therefore the receiver has to be activated anyhow so that the reception of the scheduling information does not put an extra burden on the user terminal UE1. This results in the above detailed advantage of being able to switch off the receiver or to tune the receiver to an other frequency region.

Alternatively to receiving the scheduling information S2 simultaneously to the transmission of the data packet PAC1, the user terminal UE1 could reassume regular monitoring of the signalling channel SIG CH as it did before the reception of the scheduling information S1. At this, as the receiver would have to listen to the signalling channel SIG CH, the advantage of being able to switch off the receiver or to tune the receiver to an other frequency region between the reception of the two data packets PAC1 and PAC2 would not occur.

Further, falling back to regular monitoring of the signalling channel SIG CH after the reception of the data packet PAC1 is disadvantageous from the latency point of view: if the scheduling information S2 is transmitted during the transmission of the data packet PAC1, radio resources of the shared channel SH CH used for transmitting the following data packet PAC2 can in principle be assigned which are in the time domain located more or less directly after the resources assigned for the previous data packet PAC1. Therefore, a rapid sequence of data packet transmissions can be achieved. In contrast by using regular monitoring of the signalling channel SIG CH the time difference between two consecutive data packet transmissions has to allow at least for the regular transmission of the scheduling information.

With the coordination of the transmission of scheduling information on the signalling channel SIG CH and data packets on the shared channel SH CH, an optimization in terms of the user terminal's power consumption and transfer delay of data packets to be sent to the user terminal can be realized.

As was mentioned and is depicted in figure 2, the scheduling information is transmitted at the end of the previous data packet transmission. This does not necessarily have to be the case. According to the invention, the scheduling information for a certain data packet is sent at some time during the transmission of a previous data packet. This means that the reception of the scheduling information is completed by the completion of the reception of the data packet. The point in time at which the transmission of the scheduling information begins relative to the beginning or end of the transmission of a data packet is known to the user terminal UE1 and to the base station BS as well. It can be agreed upon at the beginning of the communication between the user terminal UE1 and the base station BS or it can be a fixed and used for each communication of the user terminal UE1. In principle, this point in time could be the beginning of the transmission of a data packet. Choosing the end of a data packet is advantageous as this leaves the network infrastructure the maximum possible time to decide about the scheduling of the user terminal UE1.

At the end of the data packet PAC2, the user terminal UE1 monitors the signalling channel SIG CH as it is supposed to do and receives the scheduling information S31. As opposed to the scheduling information S1 and S2 the scheduling information S31 does not contain explicit or implicit resource information regarding the allocation of radio resources of the shared channel SH CH. To that effect, the scheduling information S31 can have an information field indicating "no scheduling" or "empty field". The user terminal UE1 when detecting this information understands that it has again to begin with regular monitoring of the signalling channel SIG CH.

Alternatively, the scheduling information S31 can indicate a time instant when the user terminal UE1 needs to read the signalling channel SIG CH again in order to potentially receive a shared channel assignment through the subsequent scheduling information S32. This can be effected by simply referring to the regular monitoring, so that the transmission time of the scheduling information S32 corresponds to a transmission time applicable for the regular monitoring. Alternatively, the transmission time of the scheduling information S32 can differ from the transmission time permitted for the scheduling using regular monitoring. Through this it is possible to achieve a longer period of time between scheduling information S31 and scheduling information S32 during which the user terminal's UE1 receiver can be switched off or tuned to an other frequency band compared to the situation of simply referring to regular monitoring of the signalling channel SIG CH.

Instead of using the scheduling information S31 for instructing the user terminal UE1 to reassume regular monitoring of the signalling channel SIG CH, no scheduling information can be sent during the transmission of the data packet PAC2. The user terminal UE1 applies a rule according to which regular monitoring of the signalling channel SIG CH will be performed in case no scheduling information is received during the reception of a data packet.

The scheduling information S32 explicitly or implicitly indicates the radio resourced used for transmitting the following data packet PAC3. At the end of the data packet PAC3 the user terminal UE1 receives the scheduling information S4 on the signalling channel SIG CH, the scheduling information S4 indicating the radio resources assigned to the user terminal UE1 for the next data packet.

Although the data packets PAC1, PAC2 and PAC3 of figure 2 have the same length, this does not have to be the case. Rather, the periods of time during which radio resources are allocated to a user terminal can vary from data packet to data packet.

According to the described procedure for scheduling a user terminal, there is no need for a signaling channel exclusively used for the respective user terminal. The signaling channel SIG CH is utilized for scheduling a plurality of user terminals, hence being a shared signaling channel. Thus, radio resources are saved compared the usage one dedicated signaling channel per user terminal. As a matter of course, more than one shared signaling channel per cell can be introduced.

Although the described embodiment refers to the data transmission in the downlink direction, the invention can be applied in the uplink direction as well. In this case, the data packets PAC1, PAC2 and PAC3 of figure 2 are transmitted from the user terminal UE1 to the base station BS. The user terminal UE1 transmits a data packet and at some time during this transmission receives the scheduling information concerning the radio resources to be used for transmitting the next or a subsequent data packet.

Although the invention has been elucidated in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for operating a radio communication system, wherein
- data packets (PAC1, PAC2, PAC3) are transmitted from a radio station (BS) to a user terminal (UE1, UE2) or from the user terminal (UE1, UE2) to the radio station (BS),
- before the transmission of a data packet (PAC1, PAC2, PAC3) the radio station (BS) transmits scheduling information (S1, S2, S32, S4) to the user terminal (UE1, UE2), the scheduling information (S1, S2, S32, S4) indicating the radio resources to be used for the transmission of the respective data packet (PAC1, PAC2, PAC3),
**characterized in that**
- during the transmission of a first data packet (PAC1), the scheduling information (S2) regarding a second data packet (PAC2) is transmitted.

2. Method according to claim 1, wherein
the second data packet's (PAC2) scheduling information (S2) is transmitted during a period of time the position of which relative to the period of time of the first data packet's (PAC1) transmission is known to the radio station (BS) and to the user terminal (UE1, UE2).

3. Method according to claim 2, wherein
the second data packet's (PAC2) scheduling information (S2) is transmitted at the end of the transmission of the first data packet (PAC1).

4. Method according to any one of the previous claims 1 to 3, wherein
the first data packet (PAC1) is transmitted using one or more first subcarriers of a frequency band,
the second data packet's (PAC2) scheduling information (S2) is transmitted using one or more second subcarriers of the frequency band, and
the first subcarriers differ from the second subcarriers.

5. Method according to according to any one of the previous claims 1 to 4, wherein
the scheduling information (S32) regarding a third data packet (PAC3) is transmitted after the transmission of the previous data packet (PAC2), the previous data packet (PAC2) being the second data packet (PAC2).

6. Method according to according to claim 5, wherein
during the transmission of the second data packet (PAC2) information (S31) is transmitted from the radio station (BS) to the user terminal (UE1, UE2) indicating the radio resources to be used for the transmission of the third data packet's (PAC3) scheduling information (S32).

7. Method according to according to claim 5 or 6, wherein during the transmission of the second data packet (PAC2) information is transmitted from the radio station (BS)
to the user terminal (UE1, UE2) instructing the user terminal (UE1, UE2) to continuously or periodically monitor a radio channel (SIG CH) used for transmitting scheduling information (S1, S2, S32, S4).

8. Method according to according to any one of the previous claims 1 to 7, wherein
during the time span between the transmission of the first data packet (PAC1) and the transmission of the second data packet (PAC2), the user terminal's (UE1, UE2) receiver is switched off.

9. Method according to according to any one of the previous claims 1 to 7, wherein
during the time span between the transmission of the first data packet (PAC1) and the transmission of the second data packet (PAC2), the user terminal's (UE1, UE2) receiver is tuned to a frequency range different from the frequency range used for the transmission of the data packets (PAC1, PAC2, PAC3) and the scheduling information (S1, S2, S32, S4).

10. Method according to according to any one of the previous claims 1 to 9, wherein
before receiving the first data packet (PAC1), the user terminal (UE1, UE2) continuously or periodically monitors a radio channel (SIG CH) used for transmitting scheduling information (S1, S2, S32, S4) and receives the scheduling information (S1) regarding the first data packet (PAC1).

11. User Terminal (UE1, UE2) for a radio communication system comprising
- means for receiving data packets (PAC1, PAC2, PAC3) transmitted from a radio station (BS) or for transmitting data packets (PAC1, PAC2, PAC3) to the radio station (BS),
- means for receiving from the radio station (BS) before the transmission of a data packet (PAC1, PAC2, PAC3) scheduling information (S1, S2, S32, S4), the scheduling information (S1, S2, S32, S4) indicating the radio resources to be used for the transmission of the respective data packet (PAC1, PAC2, PAC3),
**characterised in**
- means for receiving scheduling information (S2) regarding a second data packet (PAC2), the scheduling information (S2) regarding the second data packet (PAC2) being transmitted during the transmission of a first data packet (PAC1).

12. Radio station (BS) for a radio communication system comprising
- means for receiving data packets (PAC1, PAC2, PAC3) transmitted from a user terminal (UE1, UE2) or for transmitting data packets (PAC1, PAC2, PAC3) to the user terminal (UE1, UE2),
- means for transmitting to the user terminal (UE1, UE2) before the transmission of a data packet (PAC1, PAC2, PAC3) scheduling information (S1, S2, S32, S4), the scheduling information (S1, S2, S32, S4) indicating the radio resources to be used for the transmission of the respective data packet (PAC1, PAC2, PAC3),
**characterised in**
- means for transmitting scheduling information (S2) regarding a second data packet (PAC2), the scheduling information (S2) regarding the second data packet (PAC2) being transmitted during the transmission of a first data packet (PAC1).
